# EUROPEAN PATENT APPLICATION

(11) **EP 4 354 003 A1**
(43) Date of publication of application: **17.04.2024**
(21) Application number: 22819325.6
(22) Date of filing: 19.05.2022
(51) Int. Cl.: F16L 19/02, F16L 15/04

(54) **DISMANTLE-PREVENTION CONNECTOR**

(30) Priority: 11.06.2021 CN 202121318387 U
(71) Applicant: Zhejiang Dunan Artificial Environment Co., Ltd., Shaoxing, Zhejiang 311835 (CN)
(72) Inventor: FENG, Zhongbo, Shaoxing, Zhejiang 311835 (CN); CHEN, Diyong, Shaoxing, Zhejiang 311835 (CN); LOU, Feng, Shaoxing, Zhejiang 311835 (CN); ZHOU, Feng, Shaoxing, Zhejiang 311835 (CN)
(74) Representative: De Clercq & Partners
(86) International application number: PCT/CN2022/093983
(87) International publication number: WO 2022/257727

(57) **Abstract**

An anti-disassembly connector, including: a connecting portion (10), wherein a threaded connecting segment (11) is disposed on the connecting portion (10); and bosses (20), wherein the bosses (20) protrude from an end portion or a peripheral wall of the connecting portion (10), the bosses (20) extend along a circumferential edge of the connecting portion (10) or the peripheral wall of the connecting portion (10), each of the bosses (20) has a force-bearing surface (21) and a force-releasing surface (22), which are disposed opposite to each other, at least two bosses (20) are provided, the two bosses (20) are disposed at intervals along the circumferential edge of the connecting portion (10) or the peripheral wall of the connecting portion (10), and a gap between the two adjacent bosses (20) forms a clamping interval; a junction of the force-bearing surface (21) and the connecting portion (10) is a circular arc transition (50); and/or, the junction of the force-releasing surface (22) and the connecting portion(10) is a circular arc transition (50). The anti-disassembly connector can solve the technical problem in the art known to inventors that a pipe joint is easily disassembled due to a misoperation.

## Description

### Cross-Reference to Related Application

The present disclosure claims the priority of Chinese Patent Application No. 202121318387.7, filed on June 11, 2021, and entitled "Anti-Disassembly Connector", the contents of which are hereby incorporated by reference in its entirety.

### Technical Field

The present disclosure relates to the technical field of stop valves, and in particular, to an anti-disassembly connector.

### Background

At present, when an evaporator of an air conditioner is welded with a connecting pipe in the art known to inventors, it is generally necessary to cooperatively connect a pipe joint with a joint nut, so as to facilitate rapid installation. However, during the process of using, cleaning or maintaining, if a misoperation occurs, the joint nut is easily disassembled from the pipe joint, thereby causing the problem of pipeline leakage.

### Summary

The main objective of the present disclosure is to provide an anti-disassembly connector, so as to solve the technical problem in the art known to inventors that a pipe joint is easily disassembled due to a misoperation.

In order to achieve the above objective, the disclosure provides an anti-disassembly connector, which includes: a connecting portion, wherein a threaded connecting segment is disposed on the connecting portion; and bosses, wherein the bosses protrude from an end portion or a peripheral wall of the connecting portion, the bosses extend along a circumferential edge of the connecting portion or the peripheral wall of the connecting portion, each of the bosses has a force-bearing surface and a force-releasing surface, which are disposed opposite to each other, at least two bosses are provided, the two bosses are disposed at intervals along the circumferential edge or the peripheral wall of the connecting portion, and a gap between two adjacent bosses forms a clamping interval; a junction of the force-bearing surface and the connecting portion is a circular arc transition; and/or, the junction of the force-releasing surface and the connecting portion is a circular arc transition.

In some embodiments, each of the bosses further includes an outer cambered surface, the outer cambered surface is disposed between the force-bearing surface and the force-releasing surface, and a junction of the outer cambered surface and the force-releasing surface is a circular arc transition.

In some embodiments, the connecting portion is a connecting pipe, and a thickness of each of the bosses is greater than a thickness of a pipe wall of the connecting pipe.

In some embodiments, a force-bearing sideline is formed on a side of the force-bearing surface that is away from the connecting portion, and the force-bearing sideline is parallel to an axial line of the connecting portion; and/or, the force-bearing surface is a plane, and the force-bearing surface is parallel to the axial line of the connecting portion; and/or, the force-releasing surface is a curved surface.

In some embodiments, the force-releasing surface is a curved surface, and the force-releasing surface recesses toward an interior of a boss.

In some embodiments, an included angle between the force-releasing surface and a radial cross section of the connecting portion is α, and 20°≤α≤ 50°.

In some embodiments, each of the bosses is provided with a reinforcement portion, the reinforcement portion forms a reinforcement end face at an end away from the threaded connecting segment, and the reinforcement end face is parallel to an end face of the connecting portion; and a machining plane is disposed at the clamping interval close to the threaded connecting segment and faces the reinforcement end face, and the machining plane is parallel to the reinforcement end face.

In some embodiments, there are two bosses, and the two bosses are symmetrically disposed at the end portion of the connecting portion or the circumferential edge of the connecting portion.

In some embodiments, the anti-disassembly connector is of an integrally formed structure.

In some embodiments, According to another aspect of the present application, provided is an anti-disassembly connector, including: a connecting portion, wherein a threaded connecting segment is disposed on the connecting portion; and a boss, wherein the boss protrudes from an end portion of the connecting portion or a peripheral wall of the connecting portion, the boss extends along a circumferential edge or the peripheral wall of the connecting portion, the boss has a force-bearing surface and a force-releasing surface, which are disposed opposite to each other, at least one boss is provided, and a gap between the boss and the peripheral wall of the connecting portion forms a clamping interval; and a junction of the force-bearing surface and the connecting portion is a circular arc transition; and/or, the junction of the force-releasing surface and the connecting portion is a circular arc transition.

By applying the technical solutions of the present disclosure, during a specific operation, an operating tool acts on the force-bearing surface to form a threaded connection between the threaded connecting segment on the connecting portion and a first connector. After the anti-disassembly connector is installed on the first connector, if the operating tool acts on the force-bearing surface, an anti-disassembly sleeve can only be screwed on the first connector; and if the operating tool acts on the force-releasing surface, the force acting on the force-releasing surface cannot act on the connecting portion, so that the connecting portion cannot be smoothly disassembled through the operating tool, and thus an anti-disassembly effect is effectively achieved. In addition, by means of setting the junction to be a circular arc transition structure, stress concentration at the junction is reduced conveniently, and the internal performance of the structure is improved. Therefore, by using the anti-disassembly connector provided in the present disclosure, the technical problem in the art known to inventors that a pipe joint is easily disassembled due to a misoperation can be solved.

### Brief Description of the Drawings

The drawings, which constitute a part of the present application, are used to provide a further understanding of the present application, and schematic embodiments of the present application and descriptions thereof are used to explain the present application, but do not constitute improper limitations on the present application. In the drawings:
Fig. 1 illustrates a schematic structural diagram of an anti-disassembly connector provided in Embodiment 1 of the present application in which the junction of a force-bearing surface and a connecting portion is a circular arc transition;
Fig. 2 illustrates a schematic structural diagram of another angle of the anti-disassembly connector provided in Embodiment 1 of the present application in which the junction of the force-bearing surface and the connecting portion is the circular arc transition;
Fig. 3 illustrates a front view of the anti-disassembly connector provided in Embodiment 1 of the present application in which the junction of the force-bearing surface and the connecting portion is the circular arc transition;
Fig. 4 illustrates a top view of the anti-disassembly connector provided in Embodiment 1 of the present application in which the junction of the force-bearing surface and the connecting portion is the circular arc transition;
Fig. 5 illustrates a semi-sectional view of the anti-disassembly connector provided in Embodiment 1 of the present application;
Fig. 6 illustrates a right view of the anti-disassembly connector provided in Embodiment 1 of the present application;
Fig. 7 illustrates a schematic diagram of a mounting structure of the anti-disassembly connector provided in Embodiment 1 of the present application;
Fig. 8 illustrates a front view of the mounting structure of the anti-disassembly connector provided in Embodiment 1 of the present application; and
Fig. 9 illustrates a sectional view of the mounting structure of the anti-disassembly connector provided in Embodiment 1 of the present application.

The drawings include the following reference signs:
10, connecting portion; 11, threaded connecting segment; 12, chamfer; 13, machining plane; 20, boss; 21, force-bearing surface; 211, force-bearing sideline; 22, force-releasing surface; 23, outer cambered surface; 24, reinforcement end face; 30, first connector; 40, second connector; 50, circular arc transition.

### Detailed Description of the Embodiments

It should be noted that, in the case of no conflict, the embodiments in the present disclosure and the features in the embodiments may be combined with each other. The present disclosure will be described in detail below with reference to the drawings and in combination with the embodiments.

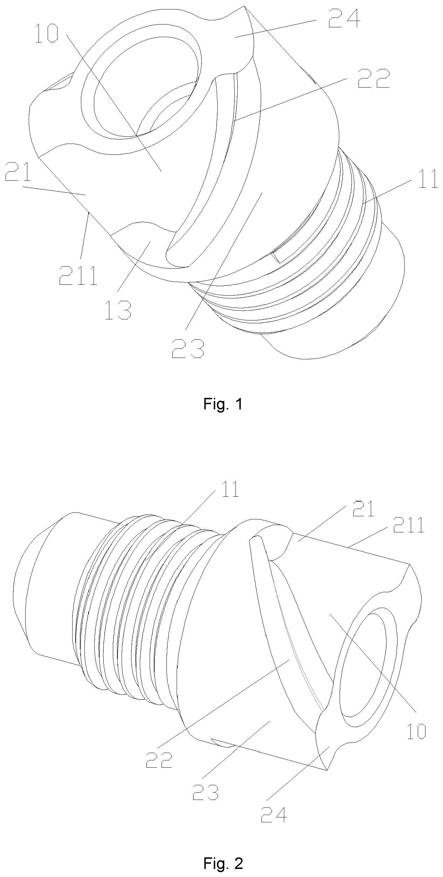

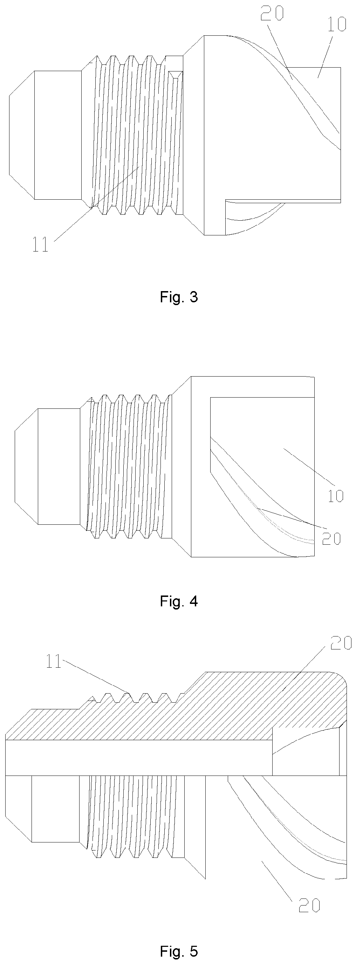

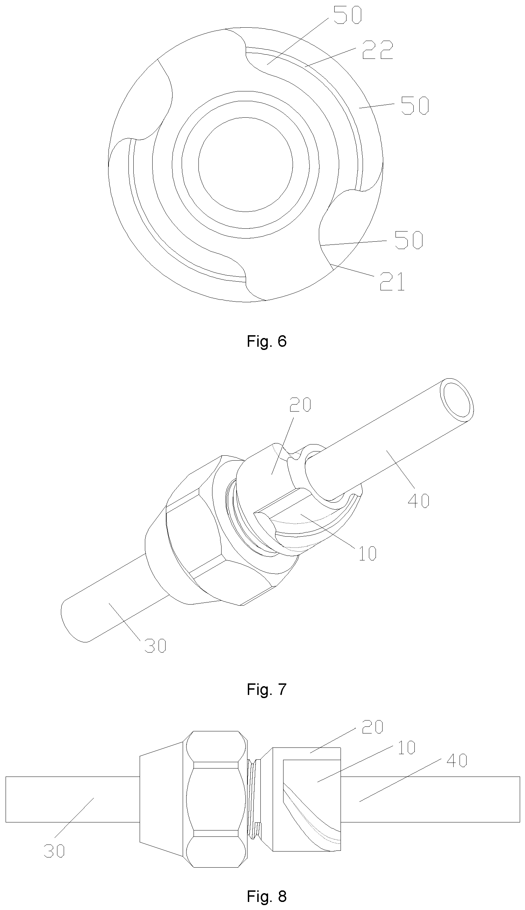

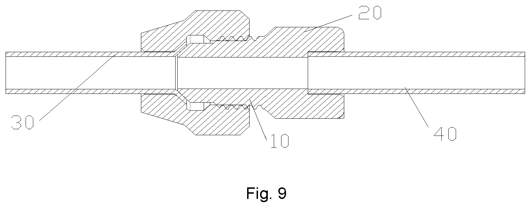

As shown in Fig. 1 to Fig. 9, Embodiment 1 of the present disclosure provides an anti-disassembly connector. The anti-disassembly connector includes a connecting portion 10 and bosses 20, wherein a threaded connecting segment 11 is disposed on the connecting portion 10. The bosses 20 protrude from an end portion of the connecting portion 10 or a peripheral wall of the connecting portion 10, the bosses 20 extend along a circumferential edge or the peripheral wall of the connecting portion 10, each of the bosses 20 has a force-bearing surface 21 and a force-releasing surface 22, which are disposed opposite to each other, at least two bosses 20 are provided, the two bosses 20 are disposed at intervals along the circumferential edge of the connecting portion 10 or the peripheral wall of the connecting portion 10, and a gap between two adjacent bosses 20 forms a clamping interval. A junction of the force-bearing surface 21 and the connecting portion 10 is a circular arc transition 50; or, the junction of the force-releasing surface 22 and the connecting portion 10 is a circular arc transition 50; or, the junction of the force-bearing surface 21 and the connecting portion 10 is a circular arc transition 50, and the junction of the force-releasing surface 22 and the connecting portion 10 is a circular arc transition 50.

By using the anti-disassembly connector provided in the present embodiment, during a specific operation, an operating tool acts on the force-bearing surface 21 to form a threaded connection between the threaded connecting segment 11 on the connecting portion 10 and a first connector 30. After the anti-disassembly connector is installed on the first connector 30, if the operating tool acts on the force-bearing surface 21, an anti-disassembly sleeve can only be screwed on the first connector 30; and if the operating tool acts on the force-releasing surface 22, the force acting on the force-releasing surface 22 cannot act on the connecting portion 10, so that the connecting portion 10 cannot be smoothly disassembled through the operating tool, and thus an anti-disassembly effect is effectively achieved. And when the operating tool is a dedicated tool, the operating tool leans against the force-bearing surface 21 to apply a force to the force-bearing surface 21, so as to screw the anti-disassembly connector, and when the operating tool is reversely operated to apply a force to the force-releasing surface 22, the operating tool deviates from the anti-disassembly connector along the force-releasing surface 22, such that the anti-disassembly connector cannot be disassembled. In addition, by means of setting the junction to be the circular arc transition 50, stress concentration at the junction is reduced conveniently, and the internal performance of the structure is improved. Therefore, by using the anti-disassembly connector provided in the present embodiment, the technical problem in the art known to inventors that a pipe joint is easily disassembled due to a misoperation can be solved.

In some embodiments, in order to reduce the stress concentration at the junction of the force-bearing surface 21 and the connecting portion 10 and to reduce the stress concentration at the junction of the force-releasing surface 22 and the connecting portion 10, the junction of the force-bearing surface 21 and the connecting portion 10 is the circular arc transition 50, and the junction of the force-releasing surface 22 and the connecting portion 10 is the circular arc transition 50, so as to better improve the internal performance of the structure.

In some embodiments, each of the bosses 20 further includes an outer cambered surface 23, the outer cambered surface 23 is disposed between the force-bearing surface 21 and the force-releasing surface 22, and a junction of the outer cambered surface 23 and the force-releasing surface 22 is the circular arc transition 50. By using such structural settings, the stress concentration at the junction of the outer cambered surface 23 and the force-releasing surface 22 can be conveniently reduced, so as to better improve the internal performance of the structure.

In some embodiments, the connecting portion 10 is a connecting pipe, a thickness of each of the bosses 20 is greater than a thickness of a pipe wall of the connecting pipe, and the portion of each of the bosses 20 of which the thickness is greater than the thickness of the connecting pipe can be used to form a reinforcement portion. By using such structural settings, the strength of the connecting pipe can be conveniently improved, so as to improve the connection stability of the connecting pipe and a second connector 40; and in addition, the structural strength of the boss 20 can also be improved, so as to facilitate a stability tightening operation.

In some embodiments, a force-bearing sideline 211 is formed on a side of the force-bearing surface 21 that is away from the connecting portion 10, and the force-bearing sideline 211 is parallel to an axial line of the connecting portion 10; and/or, the force-bearing surface 21 is a plane, and the force-bearing surface 21 is parallel to the axial line of the connecting portion 10; and/or, the force-releasing surface 22 is a curved surface.

In some embodiments, the force-bearing sideline 211 is formed on the side of the force-bearing surface 21 that is away from the connecting portion 10, and the force-bearing sideline 211 is parallel to the axial line of the connecting portion 10. The force-bearing surface 21 is a plane, and the force-bearing surface 21 is parallel to the axial line of the connecting portion 10. The force-releasing surface 22 is set to be a curved surface. By using such structural settings, the force-bearing sideline 211 is parallel to the axial line of the connecting portion 10, when a tightening operation is performed on the connecting portion 10, the situation of clamping during the tightening operation process is avoided, thereby improving the convenience of the operation. Since the force-bearing surface 21 is set to be a plane, and the force-bearing surface 21 is parallel to the axial line of the connecting portion 10, the force-bearing sideline 211 of the force-bearing surface 21 is in contact with the operating tool, thereby avoiding the contact of other portions of the force-bearing surface 21 with the operating tool, thus improving the convenience of the operation and facilitating the tightening operation. By means of setting the force-releasing surface 22 to be a curved surface, the operating tool can better deviate from the operating tool, thereby ensuring effective force release.

In some embodiments, if the operating tool is an adjustable spanner, when the operating tool performs a tightening operation, the operating tool (the operating tool is mainly an adjustable spanner in some embodiments) acts and is sandwiched on the two force-bearing sidelines 211, and the lengths of the force-bearing sidelines 211 are set within the above range, so that the contact positions of the operating tool and the force-bearing sidelines 211 can be ensured, so as to ensure the stable force application of the operating tool and to improve the operation stability. When performing a reverse operation on the force-bearing sidelines 211, the operating tool deviates from the two force-bearing sidelines 211, so that disassembly cannot be realized.

In some embodiments, the force-releasing surface 22 is a curved surface, and the force-releasing surface 22 recesses toward an interior of a boss 20. By using such structural settings, the force-releasing surface 22 can better deviate from the operating tool, so as to better realize an anti-disassembly function.

In some embodiments, an included angle between the force-releasing surface 22 and a radial cross section of the connecting portion 10 is α, α is less than 60°, and 20°≤α≤ 50°. That is, the included angle between the force-releasing surface 22 and the radial cross section on a projection surface of an axial section is α, α is less than 60°, and in some embodiments, 20°≤α≤ 50°; or, it is understood that the included angle between a tangent line of the force-releasing surface 22 and the axial line of the connecting portion 10 is α. By using such structural settings, the anti-disassembly function can be effectively realized.

In some embodiments, each of the bosses 20 is provided with a reinforcement portion, the reinforcement portion enables each of the bosses 20 to form a reinforcement end face 24 at an end away from the threaded connecting segment 11, and the reinforcement end face 24 is parallel to an end face of the connecting portion 10. With regard to the clamping interval formed between the two adjacent bosses 20, a machining plane 13 is disposed at the clamping interval close to the threaded connecting segment 11 and faces the reinforcement end face 24, and the machining plane 13 is parallel to the reinforcement end face 24, so as to conveniently perform a machining operation.

In some embodiments, the connecting portion 10 is a connecting pipe, the threaded connecting segment 11 is disposed on the peripheral wall of the connecting pipe, and the threaded connecting segment 11 and the bosses 20 are disposed at intervals. The anti-disassembly connector further includes a chamfer 12, the chamfer 12 is disposed on an inner wall surface of the connecting pipe, the chamfer 12 is disposed at an end of the connecting pipe that is close to the bosses 20 and is used for presetting a welding ring when being welded with the second connector 40. By using such structural settings, the threaded connecting segment 11 is connected with the first connector 30, the anti-disassembly connector is welded with the second connector 40, so as to communicate a flow channel in the first connector 30 with a flow channel in the second connector 40. In some embodiments, the first connector 30 includes a connecting pipe and a nut, the nut is sleeved outside the connecting pipe and is in threaded connection with the anti-disassembly connector, an end of the connecting pipe that is close to the anti-disassembly connector is provided with a flaring segment, and the flaring segment is disposed between the nut and the anti-disassembly connector, and respectively abuts against the nut and the anti-disassembly connector for sealing.

In some embodiments, there are two bosses 20, and the two bosses 20 are symmetrically disposed at the end portion of the connecting portion 10 or the periphery of the connecting portion 10. By using such structural settings, the structural layout is optimized, the compactness of the structural settings is improved, and the operation is also facilitated.

In some embodiments, the anti-disassembly connector is of an integrally formed structure. The machining plane is disposed between two adjacent bosses, so as to facilitate the machining. The outer cambered surfaces 23 of the two bosses are both arc surfaces. The threaded connecting segment 11 in some embodiments is an external threaded segment, the external threaded segment is connected with the first connector 30, and the length of the external threaded segment is greater than the length of an internal threaded segment of the first connector 30, so as to facilitate a stable connection. The anti-disassembly connector provided in some embodiments is tightened clockwise to achieve sealing; and the anti-disassembly connector cannot be opened or disassembled counterclockwise.

Embodiment 2 according to the present disclosure provides an anti-disassembly connector. The anti-disassembly connector includes: a connecting portion 10 and a boss 20, wherein a threaded connecting segment 11 is disposed on the connecting portion 10. The boss 20 protrudes from an end portion of the connecting portion 10 or a peripheral wall of the connecting portion 10, the boss 20 extends along a circumferential edge or the peripheral wall of the connecting portion 10, the boss 20 has a force-bearing surface 21 and a force-releasing surface 22, which are disposed opposite to each other, at least one boss 20 is provided, and a gap between the boss 20 and the peripheral wall of the connecting portion 10 forms a clamping interval. A junction of the force-bearing surface 21 and the connecting portion 10 is a circular arc transition 50; and/or, the junction of the force-releasing surface 22 and the connecting portion 10 is a circular arc transition 50.

The main difference between the anti-disassembly connector in the Embodiment 2 and the anti-disassembly connector in Embodiment 1 lies in the difference of the clamping interval. During an operation, when the operating tool performs a tightening operation, one acting end of the operating tool acts on the force-bearing sideline 211, an other acting end of the operating tool acts on the peripheral wall, and the force-bearing sideline 211 is disposed within the range, so that the contact position between the operating tool and the force-bearing sideline 211 can be ensured, so as to ensure the stable force application of the operating tool and to improve the operation stability. When performing a reverse operation, the operating tool moves along a force-releasing sideline to deviate from the anti-disassembly connector, so that disassembly cannot be realized. Therefore, by means of the anti-disassembly sleeve provided in the present embodiment, the technical problem in the art known to inventors that the pipe joint is easily disassembled due to misoperation can be solved.

In some embodiments, the anti-disassembly connectors in the above embodiments can be used in air conditioner stop valves.

As can be seen from the above description, the embodiments of the present disclosure implement the following technical effects: stable structure, anti-disassembly and stable action. It should be noted that, terms used herein are for the purpose of describing specific embodiments, and are not intended to limit exemplary implementations according to the present application. As used herein, unless the context clearly dictates otherwise, a singular form is intended to include a plural form as well. In addition, it should also be understood that, when the terms "contain" and/or "include" are used in the present specification, they indicate that the presence of features, steps, operations, devices, components and/or combinations thereof.

Unless specifically stated otherwise, relative arrangements, numerical expressions and numerical values of components and steps set forth in these embodiments do not limit the scope of the present application. Meanwhile, it should be understood that, for the convenience of description, the dimensions of various portions shown in the drawings are not drawn according to an actual proportional relationship. Techniques, methods and devices known to those ordinary skilled in related art may not be discussed in detail, but where appropriate, such techniques, methods and devices should be considered as a part of the authorized specification. In all examples shown and discussed herein, any specific value should be construed as illustrative only and not as restrictive. Accordingly, other examples of the exemplary embodiments may have different values. It should be noted that similar reference signs and letters refer to similar items in the following figures, so once a certain item is defined in one figure, it does not require further discussion in subsequent figures.

In the description of the present application, it should be understood that orientation or position relationships indicated by orientation words such as "front, back, upper, lower, left, right", "transverse, longitudinal, vertical, horizontal" and "top, bottom" and the like are generally orientation or position relationships shown on the basis of the drawings, and are merely for the convenience of describing the present application and simplifying the description, in the absence of opposite statement, these orientation words do not indicate or imply that the referred apparatuses or elements must have specific orientations or must be constructed and operated in specific orientations, and thus cannot be construed as limiting the protection scope of the present application; and the orientation words "inside and outside" refer to the inside and outside of the contours of the components themselves.

For the convenience of description, spatially relative terms, such as "on", "above", "on the surface", "over" and the like, may be used herein to describe spatial position relationships between one device or feature and other devices or features shown in the figures. It should be understood that, the spatially relative terms are intended to contain different orientations of the device in use or operation in addition to the orientations described in the figures. For example, if the device in the figures is turned over, the device, which is described as "above other devices or structures" or "over other devices or structures" would then be positioned as "below other devices or structures" or "beneath other devices or structures". Thus, the exemplary term "above" may include both orientations of "above" and "below". The device may also be otherwise positioned (rotated by 90 degrees or at other orientations), and the spatially relative descriptions used herein are interpreted accordingly.

In addition, it should be noted that the terms "first", "second" and the like are used for defining components and parts, and are merely for the convenience of distinguishing the corresponding components and parts, and unless otherwise stated, the above words have no special meaning, and thus cannot be construed as limiting the protection scope of the present application.

The above descriptions are only preferred embodiments of the present application, and are not intended to limit the present application. For those skilled in the art, the present application may have various modifications and changes. Any modifications, equivalent replacements, improvements and the like, made within the spirit and principle of the present application, shall be included within the protection scope of the present application.

## Claims

1. An anti-disassembly connector, comprising:
a connecting portion (10), wherein a threaded connecting segment (11) is disposed on the connecting portion (10); and
bosses (20), wherein the bosses (20) protrude from an end portion of the connecting portion (10) or a peripheral wall of the connecting portion (10), the bosses (20) extend along a circumferential edge of the connecting portion (10) or the peripheral wall of the connecting portion (10), each of the bosses (20) has a force-bearing surface (21) and a force-releasing surface (22), which are disposed opposite to each other, at least two bosses (20) are provided, two bosses (20) are disposed at intervals along the circumferential edge of the connecting portion (10) or the peripheral wall of the connecting portion (10), and a gap between two adjacent bosses (20) forms a clamping interval; and
a junction of the force-bearing surface (21) and the connecting portion (10) is a circular arc transition; and/or, the junction of the force-releasing surface (22) and the connecting portion (10) is a circular arc transition.

2. The anti-disassembly connector as claimed in claim 1, wherein each of the bosses (20) further comprises an outer cambered surface (23), the outer cambered surface (23) is disposed between the force-bearing surface (21) and the force-releasing surface (22), and a junction of the outer cambered surface (23) and the force-releasing surface (22) is a circular arc transition.

3. The anti-disassembly connector as claimed in claim 1, wherein the connecting portion (10) is a connecting pipe, and a thickness of each of the bosses (20) is greater than a thickness of a pipe wall of the connecting pipe.

4. The anti-disassembly connector as claimed in claim 1, wherein,
a force-bearing sideline (211) is formed on a side of the force-bearing surface (21) that is away from the connecting portion (10), and the force-bearing sideline (211) is parallel to an axial line of the connecting portion (10); and/or,
the force-bearing surface (21) is a plane, and the force-bearing surface (21) is parallel to the axial line of the connecting portion (10); and/or,
the force-releasing surface (22) is a curved surface.

5. The anti-disassembly connector as claimed in claim 1, wherein the force-releasing surface (22) is a curved surface, and the force-releasing surface (22) recesses toward an interior of a boss (20).

6. The anti-disassembly connector as claimed in claim 1, wherein an included angle between the force-releasing surface (22) and a radial cross section of the connecting portion (10) is a , and 20° ≤ a ≤ 50° .

7. The anti-disassembly connector as claimed in claim 1, wherein each of the bosses (20) is provided with a reinforcement portion, the reinforcement portion forms a reinforcement end face (24) at an end away from the threaded connecting segment (11), and the reinforcement end face (24) is parallel to an end face of the connecting portion (10); and a machining plane (13) is disposed at the clamping interval close to the threaded connecting segment (11) and faces the reinforcement end face (24), and the machining plane (13) is parallel to the reinforcement end face (24).

8. The anti-disassembly connector as claimed in claim 1, wherein there are two bosses (20), and the two bosses (20) are symmetrically disposed at the end portion of the connecting portion (10) or the circumferential edge of the connecting portion (10).

9. The anti-disassembly connector as claimed in claim 1, wherein the anti-disassembly connector is of an integrally formed structure.

10. An anti-disassembly connector, comprising:
a connecting portion (10), wherein a threaded connecting segment (11) is disposed on the connecting portion (10); and
a boss (20), wherein the boss (20) protrudes from an end portion of the connecting portion (10) or a peripheral wall of the connecting portion (10), the boss (20) extends along a circumferential edge or the peripheral wall of the connecting portion (10), the boss (20) has a force-bearing surface (21) and a force-releasing surface (22), which are disposed opposite to each other, at least one boss (20) is provided, and a gap between the boss (20) and the peripheral wall of the connecting portion (10) forms a clamping interval; and
a junction of the force-bearing surface (21) and the connecting portion (10) is a circular arc transition; and/or, the junction of the force-releasing surface (22) and the connecting portion (10) is a circular arc transition.
